# EUROPÄISCHE PATENTSCHRIFT

(11) **EP 3 584 060 B1**
(45) Veröffentlichungstag und Bekanntmachung des Hinweises auf die Patenterteilung: **06.04.2022**
(21) Anmeldenummer: 19173975.4
(22) Anmeldetag: 13.05.2019
(51) Int. Cl.: B29C 48/156, B29C 48/16, B29C 48/285, B29C 48/34, B29C 48/92

(54) **VERFAHREN ZUR GUMMIERUNG VON VERSTÄRKUNGSFÄDEN ODER -DRÄHTEN**
METHOD FOR GUMMING OF REINFORCEMENT THREADS OR WIRES
PROCEDE DE REVÊTEMENT DE CAOUTCHOUC DES FILS DE RENFORCEMENT

(30) Priorität: 20.06.2018 DE 102018209931
(43) Veröffentlichungstag der Anmeldung: 25.12.2019
(73) Patentinhaber: Continental Reifen Deutschland GmbH, 30165 Hannover (DE)
(72) Erfinder: Wolf, Hilke, 30165 Hannover (DE); Herres-Gzyl, Michael, 30165 Hannover (DE)
(74) Vertreter: Continental Corporation

(56) Entgegenhaltungen:
- DE-A1-102011 118 719
- JP-A- 2003 340 926
- RU-C2- 2 253 568
- US-B1- 6 209 299

## Beschreibung

Die Erfindung betrifft ein Verfahren zur Gummierung von Verstärkungsfäden oder -drähten unter Beteiligung einer Anlage mit
- zumindest einem Spulengatter mit einer Vielzahl von Spulenhaltern mit auf Spulen gewickelten Verstärkungsfäden oder -drähten, wobei jeder Spulenhalter mit einer Fadenbremse versehen ist,
- zumindest einer Umlenkrolle am Ausgang des Spulengatters,
- einem Extruder zum Plastifizieren einer Kautschukmischung,
- einem Spritzkopf, in welchem die Verstärkungsfäden oder -drähte mit der Kautschukmischung ummantelt werden und
- zumindest einem Frequenzsensor, welcher zwischen der Umlenkrolle und dem Spritzkopf bei einem Verstärkungsfaden oder -draht positioniert ist,
wobei die Verstärkungsfäden oder -drähte zwischen der Umlenkrolle und dem Spritzkopf unter Spannung stehen.

Ein Verfahren der eingangs genannten Art ist beispielsweise aus der JP 2003 340 926 A bekannt. Dabei versetzt ein Ultraschallschwinger die von einem Spulengatter abgespulten Verstärkungsfäden gezielt in Schwingung. Die Schwingungsamplitude der Verstärkungsfäden wird mit einem Detektor kontrolliert, welcher ein von der Größe der Schwingungsamplitude abhängiges Signal an den Ultraschallschwinger weiterleitet, wobei dieser derart betrieben wird, dass die Schwingungsamplitude bevorzugt 15 µm bis 30 µm beträgt. Nachfolgend werden die in Schwingung versetzten Fäden in einer Beschichtungseinrichtung gummiert, um eine die Verstärkungsfäden enthaltende Kautschukmischungsbahn herzustellen, in welcher - bedingt durch die Schwingungen der Fäden - die Räume zwischen den Fäden mit Kautschukmischung gefüllt werden können und nach der Vulkanisation die Qualität der entsprechenden Festigkeitsträgerlage verbessert sein soll.

Aus der US 6 209 299 B1 ist eine Vorrichtung zur Herstellung eines Kabels, insbesondere eines Stromkabels, bekannt. Die Vorrichtung umfasst zwei Twisteinrichtungen, wobei in der ersten Twisteinrichtung ein erster Draht getwistet wird und in der zweiten Twisteinrichtung der getwistete erste Draht mit einem zweiten Draht verdrillt wird.

Die RU 2 253 568 C2 offenbart einen für thermoplastische Kunststoffe vorgesehenen Extruder, dessen Mundstück auf der Innenseite mit einer Beschichtung versehen ist, wobei das Material der Beschichtung elastischer ist als der zu extrudierende Kunststoff. Der Extruder eignet sich beispielsweise zur Herstellung von Rohren oder Profilen.

Die DE 10 2011 118 719 A1 offenbart ein Verfahren zum Extrudieren eines medizinischen Instruments, welches in einen menschlichen oder tierischen Körper einbringbar ist. Ein stabförmiger Körper wird mittels einer rohrförmigen Kanüle in einen Extrusionsraum einer Extrusionseinrichtung geführt und nachfolgend mit einem Polymer umhüllt. Insbesondere soll es möglich sein, einzelne stabförmige Körper in einer vorbestimmten Position in einem medizinischen Instrument anzuordnen.

Eine Anlage der eingangs genannten Art ist beispielsweise unter der Bezeichnung Cap Strip Line oder der Bezeichnung Cap Strip System der Fachwelt bekannt und wird zur Herstellung von mit textilen Fäden verstärkten Materialstreifen für Cap Plies bzw. Gürtelbandagen von Fahrzeugluftreifen verwendet. Die Firma KraussMaffai Berstorff GmbH bietet etwa unter der Bezeichnung Cap Strip Line eine Anlage zur Fertigung von Spulbandagen für Hochgeschwindigkeitsreifen mit Nylon- oder Hybridfäden an, welche die Herstellung von 16 Materialstreifen mit jeweils 9 Fäden in einem Arbeitsgang gestattet. Diese Anlage weist ein Spulengatter mit 144 Spulen zur Aufnahme von Nylon- oder Hybridfäden auf. Die am Spulengatter angeordneten Spulenhalter sind jeweils mit einer einstellbaren elektromagnetischen Fadenbremse versehen, um derart für eine möglichst optimale Spannung der Fäden bei deren Gummierung im Spritzkopf zu sorgen.

Mit einer weiteren Anlage der eingangs genannten Art werden gleichzeitig mehrere aus Stahl bestehende Verstärkungsdrähte einzeln gummiert und in entsprechender Anzahl zur Herstellung von Wulstkernen von Fahrzeugluftreifen verwendet.

Bekannt sind ferner Anlagen der eingangs genannten Art, die zur Herstellung von Festigkeitsträgern für Gürtellagen von Fahrzeugluftreifen dienen, wobei die Festigkeitsträger aus insbesondere drei in Gummi eingebetteten und aus Stahl bestehenden Verstärkungsdrähten bestehen.

Für eine optimale Qualität der hergestellten gummierten Fäden oder Drähte bzw. Materialstreifen ist es wesentlich, dass die Fäden oder Drähte bei der Gummierung unter einer bestimmten bzw. definierten Spannung stehen. Haben beispielsweise alle Fäden oder Drähte in einem Materialstreifen nicht die gleiche Spannung, so wirkt sich das unmittelbar auf die mit den Materialstreifen hergestellten Verstärkungslagen, wie Cap Plies bzw. Gürtelbandagen oder Gürtellagen von Fahrzeugluftreifen aus, indem etwa die auf den Reifen wirkenden Kräfte nicht gleichmäßig übertragen werden. Spannungsschwankungen oder eine reduzierte Spannung von Fäden oder Drähten haben ihre Ursache meist in Fehlfunktionen der betreffenden Fadenbremsen bei den Spulenhaltern. Bislang ist es nicht möglich, solche Fehlfunktionen festzustellen, lediglich ein Totalausfall einer Fadenbremse macht sich bemerkbar.

Der Erfindung liegt daher die Aufgabe zugrunde, bei einem Verfahren der eingangs genannten Art Spannungsschwankungen in einem bestimmten Bereich oder eine reduzierte Spannung von zu gummierenden Verstärkungsfäden oder -drähten feststellen zu können, um umgehend entsprechende Maßnahmen treffen zu können.

Gelöst wird die gestellte Aufgabe erfindungsgemäß dadurch, dass mittels des Frequenzsensors die Eigenfrequenz der Schwingungen des Verstärkungsfadens oder - drahtes erfasst wird, wobei eine Software die Eigenfrequenz mit einer Sollfrequenz vergleicht und ein definiertes Abweichen von dieser signalisiert, sodass eine Fehlfunktion der Fadenbremse des zugehörigen Spulenhalters feststellbar ist.

Die Erfindung nützt die Tatsache, dass die Fäden während ihres Transports zum Spritzkopf in Schwingung versetzt sind. Mittels eines Frequenzsensors lässt sich über die Eigenfrequenz der Schwingungen eines Fadens die Ist-Spannung dieses Fadens bestimmen und überwachen, sodass, wenn dieser Faden ein vorgegebenes Frequenz- und damit Spannungsfenster verlässt, dies von der die Daten des Frequenzsensors verarbeitenden Software signalisiert und etwa dem Maschinenführer gemeldet wird.

Die Erfindung lässt sich auf eine sehr variable Weise an die Gegebenheiten an der jeweiligen Anlage anpassen. So kann beispielsweise und vorzugsweise vorgesehen sein, dass der Frequenzsensor ober- oder unterhalb des Verstärkungsfadens oder -drahtes positioniert ist und insbesondere, dass bei jedem Verstärkungsfaden oder -draht je ein Frequenzsensor positioniert ist.

Werden in einer Anlage mehrere Verstärkungsfäden oder -drähte zu einer Anzahl von Materialstreifen gummiert, so ist es bevorzugt, wenn eine Anzahl von Frequenzsensoren in einer Vorrichtung zusammengefasst wird. Dabei kann vorgesehen sein, dass jedem Faden ein Frequenzsensor zugeordnet ist.

Bei einer alternativen Ausführungsform ist vorgesehen, dass einzelne Frequenzsensoren oder die eine Anzahl von Frequenzsensoren aufweisende Vorrichtung zur Spannungsüberwachung einzelner oder von mehreren Verstärkungsfäden oder -drähten in ihrer Position veränderbar ist bzw. sind. Auf diese Weise können einzelne Fäden oder auch eine Gruppe von Fäden abwechselnd überwacht werden, wobei der Positionswechsel auch automatisiert erfolgen kann.

Bei einer besonders bevorzugten Ausführung sind die Frequenzsensoren elektromagnetische Tonabnehmer, wie sie beispielsweise bei Musikinstrumenten Verwendung finden.

Die Frequenzsensoren können zwischen der Umlenkrolle bzw. der in Laufrichtung der Fäden letzten Umlenkrolle nach dem Spulengatter und dem Spritzkopf in beliebiger Position angeordnet werden. Bei einer bevorzugten Ausführung ist der Frequenzsensor bzw. sind die Frequenzsensoren in Faden- bzw. Drahtlaufrichtung unmittelbar nach der Umlenkrolle bzw. der in Laufrichtung letzten Umlenkrolle, falls mehrere Umlenkrollen vorgesehen sind, positioniert. Eine derartige Anordnung bietet sich vor allem aus Platzgründen an.

Handelt es sich bei der Anlage um eine solche, bei welcher zwischen dem Spulengatter und dem Spritzkopf eine Einrichtung zur parallelen Ausrichtung der Fäden positioniert ist, ist es vorteilhaft, wenn der Frequenzsensor bzw. die Frequenzsensoren zwischen dieser Einrichtung und dem Spritzkopf positioniert ist bzw. sind. Eine derartige Anlage ist beispielsweise eine sogenannte Cap Strip Line zur Herstellung von mehrere, parallel zueinander verlaufende, textile Verstärkungsfäden enthaltenden Materialstreifen zur Bildung von Spulbandagelagen auf Gürtelverbänden von Fahrzeugluftreifen.

Eine Überwachung der Spannung von Verstärkungsdrähten ist besonders vorteilhaft bei einer Anlage, bei welcher einzelne, aus Stahl bestehende Verstärkungsdrähte gummiert werden, wobei die gummierten Verstärkungsdrähte beispielsweise zur Herstellung von Wulstkernen von Fahrzeugluftreifen verwendet werden.

Besonders vorteilhaft ist ferner die Überwachung der Spannung von Verstärkungsdrähten in Anlagen, welche zur Herstellung von gummierten Festigkeitsträgern aus mehreren, insbesondere aus drei, aus Stahl bestehenden Verstärkungsdrähten verwendet werden. Diese Festigkeitsträger werden nachfolgend beispielsweise als Festigkeitsträger in Gürtellagen, insbesondere in sogenannten Null-Grad-Lagen, von Fahrzeugluftreifen für Schwerlastfahrzeuge eingesetzt.

Weitere Merkmale, Vorteile und Einzelheiten der Erfindung werden nun anhand der schematischen Zeichnung, die ein Ausführungsbeispiel darstellt, näher beschrieben. Dabei zeigt die einzige Figur,

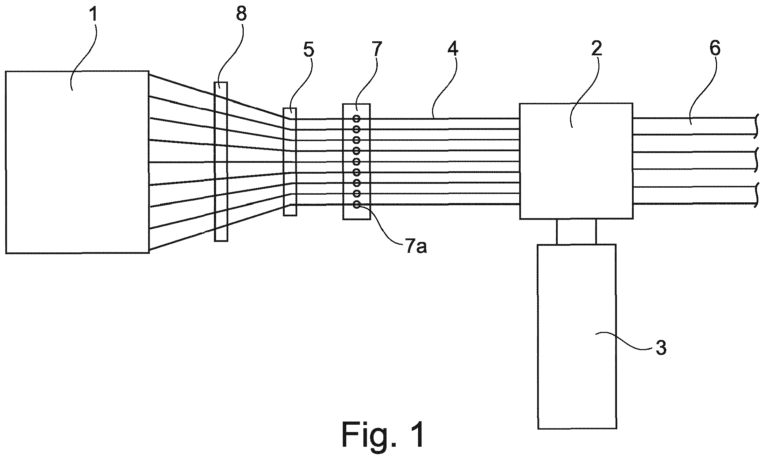

Fig. 1 Bestandteile einer Anlage zur Herstellung bandartiger Materialstreifen.

Fig. 1 zeigt von einer Anlage jene in Verarbeitungsrichtung aufeinanderfolgenden Anlagen-Bestandteile, die für das Verständnis der Erfindung wesentlich sind. Bei der als Beispiel dargestellten Anlage handelt es sich um eine sogenannte Cap Strip Line zur Herstellung von bandartigen Materialstreifen, insbesondere für Gürtelbandagelagen von Fahrzeugluftreifen.

Beim gezeigten Ausführungsbeispiel gehören zu den Bestandteilen der Anlage zumindest ein Spulengatter 1, ein Spritzkopf 2 und ein Extruder 3. Das Spulengatter 1 ist mit einer Vielzahl von nicht dargestellten Spulen mit aufgewickelten Verstärkungsfäden 4 bestückt, welche nach dem Passieren zumindest einer Umlenkrolle 8 und einer Lochblende 5 in einer Ebene und parallel zueinander unter geringen gegenseitigen Abständen von einigen Millimetern verlaufend dem Spritzkopf 2 zugeführt werden. Bei der Herstellung von Spulbandagen bzw. Cap Plies von Gürtelverbänden von Fahrzeugluftreifen sind die Verstärkungsfäden 4 insbesondere textile Fäden, beispielsweise Korde aus Polyamid 6.6-Polyester- oder Aramid-Garnen. Die textilen Verstärkungsfäden 4 können auch Hybridkorde, beispielsweise aus Nylon- und Aramid-Garnen, sein. Die unter Zugspannung stehenden Verstärkungsfäden 4 werden im Spritzkopf 2 an einer nicht gezeigten Schablone in einer Anzahl von beispielsweise 7 bis 14 Verstärkungsfäden von oben und von unten mit einer im Extruder 3 plastifizierten Kautschukmischung bedeckt und derart in die Kautschukmischung eingebettet, dass aus dem Spritzkopf 2 bandartige, mit Verstärkungsfäden 4 verstärkte Materialstreifen 6 austreten. Die Materialstreifen 6 werden unter Spannung über eine nicht dargestellte Kühlvorrichtung geführt und nachfolgend in einer nicht gezeigten Aufwickelstation einzeln aufgewickelt und der weiteren Verwendung zugeführt.

Beim Gummierungsvorgang im Spritzkopf 2 ist es wichtig, dass, um die erwünschten Eigenschaften des Materialstreifens 6 zu gewährleisten, sämtliche Verstärkungsfäden 4, die durch Gummierung einen Materialstreifen 6 bilden, unter einer gleich großen Spannung stehen. Die Spannung jedes einzelnen Fadens 4 wird durch Fadenbremsen, insbesondere elektromagnetische Fadenbremsen, an den Spulenhaltern des Spulengatters 1 eingestellt, jeder Verstärkungsfaden 4 verfügt über eine separate elektromagnetische Fadenbremse. Die Bremsen werden soweit überwacht, dass der ein- und ausgeschaltete Zustand feststellbar ist. Welche Fadenspannung und ob überhaupt eine Fadenspannung aufgebaut ist, ist nicht feststellbar, es wird der Ist-Wert der jeweiligen Fadenspannung nicht ermittelt.

Die unter Spannung stehenden Verstärkungsfäden 4 schwingen im Bereich zwischen der Umlenkrolle 8 und dem Spritzkopf 2 mit einer bestimmten Eigenfrequenz, die von der über die Bremse aufgebrachten Spannung sowie von der Fadenkonstruktion und vom Material des Verstärkungsfadens 4 abhängig ist. Jedem Spannungswert lässt sich somit eine Frequenz zuordnen und damit auch detektieren. Mit einer Vorrichtung 7, die bei jedem Verstärkungsfaden 4, insbesondere ober- oder unterhalb jedes Verstärkungsfadens 4, positionierte Frequenzsensoren 7a aufweist, lässt sich die Eigenfrequenz jedes Verstärkungsfadens 4 messen. Jeder Frequenzsensor 7a ist entsprechend kalibriert, sodass, sobald die Schwingung eines Verstärkungsfadens 4 ein vorgegebenes Frequenz- und somit Spannungsfenster verlässt, softwaregesteuert ein Signal, optisch oder akustisch, ausgelöst und dem Maschinenführer übermittelt wird. Als Frequenzsensoren 7a können beispielsweise elektromagnetische Tonabnehmer verwendet werden, welche die Schwingungen der Verstärkungsfäden 4 in eine elektrische Wechselspannung umsetzen. Die Ursache einer etwaigen Frequenz- oder Spannungsabweichung eines Verstärkungsfadens 4 kann eine Fehlfunktion der elektromagnetischen Bremse dieses Verstärkungsfadens 4 sein und kann beispielsweise einen Austausch der elektromagnetischen Bremse erfordern.

Die Vorrichtung 7 kann eine Anzahl von Frequenzsensoren 7a aufweisen, die geringer ist als jene der zur Gummierung vorgesehenen Verstärkungsfäden 4. In diesem Fall kann die Vorrichtung bewegbar angeordnet werden und in insbesondere regelmäßigen Zeitabständen jeweils eine andere Gruppe von Verstärkungsfäden 4 überwachen.

Bei Anlagen, bei welchen gleichzeitig wenige, insbesondere aus Stahl bestehende Verstärkungsdrähte einzeln oder in Gruppen mit beispielsweise drei Verstärkungsdrähten gummiert werden, können auch einzelne Frequenzsensoren 7a unterhalb der Drähte positioniert werden.

### Bezugszeichenliste

- 1: Spulengatter
- 2: Spritzkopf
- 3: Extruder
- 4: Faden
- 5: Lochblende
- 6: Materialstreifen
- 7: Vorrichtung
- 7a: Frequenzsensor
- 8: Umlenkrolle

## Patentansprüche

1. Verfahren zur Gummierung von Verstärkungsfäden oder -drähten (4) unter Beteiligung einer Anlage mit
- zumindest einem Spulengatter (1) mit einer Vielzahl von Spulenhaltern mit auf Spulen gewickelten Verstärkungsfäden oder -drähten (4), wobei jeder Spulenhalter mit einer Fadenbremse versehen ist,
- zumindest einer Umlenkrolle (8) am Ausgang des Spulengatters (1),
- einem Extruder (3) zum Plastifizieren einer Kautschukmischung,
- einem Spritzkopf (2), in welchem die Verstärkungsfäden oder -drähte (4) mit der Kautschukmischung ummantelt werden und
- zumindest einem Frequenzsensor (7a), welcher zwischen der Umlenkrolle (8) und dem Spritzkopf (2) bei einem Verstärkungsfaden oder -draht (4) positioniert ist,
wobei die Verstärkungsfäden oder -drähte (4) zwischen der Umlenkrolle (8) und dem Spritzkopf (2) unter Spannung stehen,
**dadurch gekennzeichnet,**
**dass** mittels des Frequenzsensors (7a) die Eigenfrequenz der Schwingungen des Verstärkungsfadens oder -drahtes (4) erfasst wird, wobei eine Software die Eigenfrequenz mit einer Sollfrequenz vergleicht und ein definiertes Abweichen von dieser signalisiert, sodass eine Fehlfunktion der Fadenbremse des zugehörigen Spulenhalters feststellbar ist.

2. Verfahren nach Anspruch 1, wobei der Frequenzsensor (7a) der Anlage ober- oder unterhalb des Verstärkungsfadens oder -drahtes (4) positioniert ist.

3. Verfahren nach Anspruch 1 oder 2, wobei die Anlage bei jedem Verstärkungsfaden oder -draht (4) je einen Frequenzsensor (7a) aufweist.

4. Verfahren nach einem der Ansprüche 1 bis 3, wobei bei der Anlage eine Anzahl von Frequenzsensoren (7a) in einer Vorrichtung zusammengefasst ist.

5. Verfahren nach einem der Ansprüche 1 bis 4, wobei bei der Anlage einzelne Frequenzsensoren (7a) oder die eine Anzahl von Frequenzsensoren (7a) aufweisende Vorrichtung zur Spannungsüberwachung einzelner oder von mehreren Verstärkungsfäden oder -drähten in ihrer Position veränderbar ist bzw. sind.

6. Verfahren nach einem der Ansprüche 1 bis 5, wobei die Frequenzsensoren (7a) der Anlage elektromagnetische Tonabnehmer sind.

7. Verfahren nach einem der Ansprüche 1 bis 6, wobei der Frequenzsensor (7a) bzw. die Frequenzsensoren (7a) der Anlage in Faden-bzw. Drahtlaufrichtung unmittelbar nach der Umlenkrolle (8) positioniert ist bzw. sind.

8. Verfahren nach einem der Ansprüche 1 bis 7, wobei die Anlage eine zwischen dem Spulengatter (1) und dem Spritzkopf (2) positionierten Einrichtung (5) zur parallelen Ausrichtung der Fäden (4), insbesondere unter gleichen Abständen in einer Ebene, aufweist, wobei der Frequenzsensor (7a) bzw. die Frequenzsensoren (7a) zwischen dieser Einrichtung und dem Spritzkopf (2) positioniert ist bzw. sind.

9. Verfahren nach einem der Ansprüche 1 bis 8, wobei bandartige Materialstreifen (6) aus in eine Kautschukmischung eingebetteten, parallel zueinander und in Längsrichtung der Materialstreifen (6) verlaufenden, textilen Fäden (4) hergestellt werden.

10. Verfahren nach einem der Ansprüche 1 bis 8, wobei einzelne gummierte aus Stahl bestehende Verstärkungsdrähte, insbesondere für Wulstkerne von Fahrzeugluftreifen, hergestellt werden.

11. Verfahren nach einem der Ansprüche 1 bis 8, wobei gummierte Festigkeitsträger aus insbesondere drei aus Stahl bestehenden Verstärkungsdrähten, insbesondere für Gürtellagen von Fahrzeugluftreifen, hergestellt werden.

## Claims

1. Method for rubber-coating reinforcing threads or wires (4) involving the use of an installation with
- at least one spool rack (1) with a multiplicity of spool holders with reinforcing threads or wires (4) wound on spools, each spool holder being provided with a thread brake,
- at least one deflecting roller (8) at the output of the spool rack (1),
- an extruder (3) for plasticating a rubber compound,
- a die head (2), in which the reinforcing threads or wires (4) are sheathed with the rubber compound and
- at least one frequency sensor (7a), which is positioned at a reinforcing thread or wire (4) between the deflecting roller (8) and the die head (2),
the reinforcing threads or wires (4) being under tension between the deflecting roller (8) and the die head (2),
**characterized**
**in that** the natural frequency of the vibrations of the reinforcing thread or wire (4) is detected by means of the frequency sensor (7a), software comparing the natural frequency with a setpoint frequency and signalling a defined deviation from this setpoint frequency, so that a malfunction of the thread brake of the associated coil holder can be ascertained.

2. Method according to Claim 1, the frequency sensor (7a) of the installation being positioned above or below the reinforcing thread or wire (4).

3. Method according to Claim 1 or 2, the installation having a frequency sensor (7a) at each reinforcing thread or wire (4).

4. Method according to one of Claims 1 to 3, a number of frequency sensors (7a) being combined in an apparatus in the installation.

5. Method according to one of Claims 1 to 4, individual frequency sensors (7a) or the apparatus having a number of frequency sensors (7a) in the installation being variable in their position for monitoring the tension of single or multiple reinforcing threads or wires.

6. Method according to one of Claims 1 to 5, the frequency sensors (7a) of the installation being electromagnetic sound pickups.

7. Method according to one of Claims 1 to 6, the frequency sensor (7a) or the frequency sensors (7a) of the installation being positioned directly after the deflecting roller (8) in the running direction of the thread or wire.

8. Method according to one of Claims 1 to 7, the installation having, positioned between the spool rack (1) and the die head (2), a device (5) for the parallel alignment of the threads (4), in particular at equal intervals in a plane, the frequency sensor (7a) or the frequency sensors (7a) being positioned between this device and the die head (2).

9. Method according to one of Claims 1 to 8, band-like material strips (6) being produced from textile threads (4) that are embedded in a rubber compound and run parallel to one another and in the longitudinal direction of the material strips (6).

10. Method according to one of Claims 1 to 8, single rubber-coated steel reinforcing wires being produced, in particular for bead cores of pneumatic vehicle tyres.

11. Method according to one of Claims 1 to 8, rubber-coated reinforcing elements being produced from in particular three steel reinforcing wires, in particular for bracing plies of pneumatic vehicle tyres.

## Revendications

1. Procédé de caoutchoutage de fils de renforcement ou de fils de renforcement métalliques (4) à l'aide d'une installation comprenant
- au moins un râtelier de bobines (1) comportant un grand nombre de porte-bobine pourvus de fils de renforcement ou de fils de renforcement métalliques (4) qui sont enroulés sur des bobines, chaque porte-bobine étant pourvu d'un frein de fil,
- au moins un galet de renvoi (8) en sortie du râtelier de bobines (1),
- une extrudeuse (3) destinée à plastifier un mélange de caoutchoucs,
- une tête de pulvérisation (2) dans laquelle les fils de renforcement ou les fils de renforcement métalliques (4) sont enrobés du mélange de caoutchoucs et
- au moins un capteur de fréquence (7a) qui est positionné entre le galet de renvoi (8) et la tête de pulvérisation (2) au niveau d'un fil de renforcement ou d'un fil de renforcement métallique (4),
les fils de renforcement ou les fils de renforcement métalliques (4) étant sous tension entre le galet de renvoi (8) et la tête de pulvérisation (2),
**caractérisé en ce que**
la fréquence propre des vibrations du fil de renforcement ou du fil de renforcement métallique (4) est détectée au moyen du capteur de fréquence (7a), un logiciel comparant la fréquence propre à une fréquence de consigne et signalant un écart défini par rapport à celle-ci de sorte qu'un dysfonctionnement du frein de fil du porte-bobine associé puisse être détecté.

2. Procédé selon la revendication 1, le capteur de fréquence (7a) de l'installation étant positionné au-dessus ou au-dessous du fil de renforcement ou du fil de renforcement métallique (4).

3. Procédé selon la revendication 1 ou 2, l'installation comportant un capteur de fréquence (7a) pour chaque fil de renforcement ou fil de renforcement métallique (4).

4. Procédé selon l'une des revendications 1 à 3, dans l'installation un certain nombre de capteurs de fréquence (7a) étant regroupés en un dispositif.

5. Procédé selon l'une des revendications 1 à 4, dans l'installation des capteurs de fréquence (7a) individuels ou le dispositif comportant un certain nombre de capteurs de fréquence (7a) pouvant être modifiés quant à leur position afin de surveiller la tension d'un ou plusieurs fils de renforcement ou fils de renforcement métalliques.

6. Procédé selon l'une des revendications 1 à 5, les capteurs de fréquence (7a) de l'installation étant des détecteurs phoniques électromagnétiques.

7. Procédé selon l'une des revendications 1 à 6, le capteur de fréquence (7a) ou les capteurs de fréquence (7a) de l'installation sont positionnée immédiatement en aval du galet de renvoi (8) par référence au sens de défilement du fil ou du fil métallique.

8. Procédé selon l'une des revendications 1 à 7, l'installation comporte un moyen (5) qui est positionné entre le râtelier de bobines (1) et la tête de pulvérisation (2) et qui est destiné à orienter en parallèle les fils (4), notamment à égales distances dans un plan, le capteur de fréquence (7a) ou les capteurs de fréquence (7a) étant positionnés entre ce moyen et la tête de pulvérisation (2).

9. Procédé selon l'une des revendications 1 à 8, des pellicules de matériau (6) en forme de bande étant réalisées à partir de fils textiles (4) noyés dans un mélange de caoutchoucs et s'étendant parallèlement entre eux et dans la direction longitudinale de la bande de matériau (6).

10. Procédé selon l'une des revendications 1 à 8, des fils de renforcement métalliques caoutchoutés individuels, notamment en acier, étant réalisés notamment pour des tringles de talon de pneumatiques de véhicules.

11. Procédé selon l'une des revendications 1 à 8, des renforts caoutchoutés étant réalisés à partir de fils de renforcement en acier, notamment trois, qui sont destinés notamment à des nappes de ceinture de pneumatiques de véhicules.
